# EUROPÄISCHE PATENTSCHRIFT

(11) **EP 3 649 067 B1**
(45) Veröffentlichungstag und Bekanntmachung des Hinweises auf die Patenterteilung: **29.03.2023**
(21) Anmeldenummer: 18743402.2
(22) Anmeldetag: 28.06.2018
(51) Int. Cl.: B65G 21/20

(54) **VORRICHTUNG ZUM FÜHREN VON BEHÄLTER FÜR EINEN FÖRDERER**
SYSTEM FOR GUIDING CONTAINERS ON A CONVEYOR
SYSTÈME DE GUIDAGE DE CONTENEURS POUR UN CONVOYEUR

(30) Priorität: 07.07.2017 DE 102017115239
(43) Veröffentlichungstag der Anmeldung: 13.05.2020
(73) Patentinhaber: KHS GmbH, 44143 Dortmund (DE)
(72) Erfinder: FAHLDIECK, Andreas, 55743 Idar-Oberstein (DE)
(86) Internationale Anmeldenummer: PCT/EP2018/067402
(87) Internationale Veröffentlichungsnummer: WO 2019/007798

(56) Entgegenhaltungen:
- DE-A1-102013 105 018
- US-A- 717 923
- US-A- 5 943 838

## Beschreibung

Die Erfindung betrifft eine Vorrichtung zum Führen von Behältern und ein Verfahren zum Herstellen der Vorrichtung.

Führungsvorrichtungen für Behälter sind bspw. in Behälterbehandlungsanlagen vorhanden. Führungsvorrichtungen gewährleisten dabei, dass die Behälter, bspw. Getränkebehälter wie Flaschen, Tetrapacks oder Ähnliches, auf einem vorgegebenen Weg durch die Behälterbehandlungsanlage hindurchbewegt werden. Die Behälter können mittels Transportvorrichtungen durch die Behälterbehandlungsvorrichtung bewegt werden. Dabei sind die Führungseinrichtungen dazu vorgesehen, dass die Behälter an diesen entlanggleiten oder, wenn die Führungseinrichtungen mit einer Transportvorrichtung gekoppelt sind, zumindest abschnittsweise an diesen bei ihrer Bewegung entlang des Weges durch die Behälterbehandlungsanlage anliegen.

Aus der WO 2007021197A2 ist eine Führungsvorrichtung für Behälter bekannt, die auf einem Transportband befördert werden. Die Führungsvorrichtungen umfasst einen Tragarm der seitlich am Transportband angeordnet ist. An den Tragarm sind Halteklemmen angebracht, an denen die Führungsgeländer, wie beispielsweise Führungsstangen, befestigt werden. Eine weitere Führungsvorrichtung für Behälter ist aus der DE 10 2013 105 018 A1 bekannt, bei der Haltevorrichtungen für Führungsschienen an der Seitenkante eines Bauteils der Behälterbehandlungsanlagen angeordnet und einstückig mit diesem Bauteil ausgebildet sind. Die Vorrichtung zum Führen von Behältern der DE 10 2013 105 018 A1 weist einen Grundkörper der einen flächigen Abschnitt aufweist, und eine Vielzahl von Haltevorrichtungen auf, wobei jede Haltevorrichtung mindestens einen gebogenen Geländersteg umfasst, der an einem ersten Ende mit dem flächigen Abschnitt und an einem dem ersten Ende gegenüberliegenden zweiten Ende mit einem Geländerträger verbunden ist, wobei der Geländerträger Haltearme aufweist, wobei ein Führungsgeländer zum Führen von Behältern direkt an den Haltearmen direkt angeordnet ist, und wobei der flächige Abschnitt des Grundkörpers und die Haltevorrichtungen mit Geländersteg, Geländerträger und Haltearm einstückig ausgebildet sind.

Aufgrund der Ausrichtung der Haltevorrichtungen können die Führungsschienen besonders einfach in eine Vielzahl von Haltevorrichtungen eingeschoben werden.

Das Dokument US 5,943,838 (siehe Fig. 3 und 4) offenbart eine Vorrichtung mit (die Bezugszeichen in Klammern sind die des US-Dokuments):
- einem Grundkörper (14) der einen flächigen Abschnitt (18) mit einer Vielzahl von Ausnehmungen (16) aufweist,
- einer Vielzahl von Haltevorrichtungen (30), wobei jeweils mindestens eine Haltevorrichtung (30) im Bereich einer Ausnehmung (16) angeordnet ist,
- wobei jede Haltevorrichtung (30) mindestens einen gebogenen Steg (30) umfasst, der an einem ersten Ende mit dem flächigen Abschnitt (18) und an einem dem ersten Ende gegenüberliegenden zweiten Ende mit einem Träger (30) verbunden ist,
- wobei der Träger (30) mindestens einen Haltearm (30) aufweist, der weitestgehend senkrecht zur Ebene des flächigen Abschnitts (18) ausgerichtet ist, und
- wobei der flächige Abschnitt (18) des Grundkörpers (14) und die Haltevorrichtungen (30) mit Steg (30), Träger (30) und Haltearm (30) einstückig ausgebildet sind.

Die Behälterbehandlungsanlagen sind üblicherweise für die Verwendung einer Vielzahl von unterschiedlichen Behältern ausgebildet. Dabei sind zahlreiche Bauteile, wie bspw.

Führungsvorrichtungen als Formatteile oder Teil eines Formatteils ausgebildet, die auf bestimmte Behälterformate ausgerichtet sind. Bei einem Wechsel des Behältertyps müssen somit häufig auch die eingebauten Formatteile ausgetauscht werden.

Gerade bei Behälterbehandlungsanlagen für Lebensmittel kommt es häufig zu Verunreinigungen der Transportvorrichtungen und der Führungsvorrichtungen, bspw. aufgrund von bereits befüllten umkippenden oder zerbrechenden Behältern. Um die hohen Hygienestandards in der Lebensmittelindustrie einfach erfüllen zu können, müssen die Führungsvorrichtungen besonders einfach reinigbar sein.

Der Erfindung liegt somit die Aufgabe zu Grunde, leicht herstellbare und schnell auswechselbare Führungsvorrichtungen für Behälter bereitzustellen, die besonders unempfindlich gegen Verschmutzungen und leicht zu reinigen sind.

Die der Erfindung zugrunde liegende Aufgabe wird durch eine Vorrichtung mit den Merkmalen des Anspruchs 1 und ein Verfahren mit den Merkmalen des Anspruchs 10 gelöst. Vorteilhafte Ausführungen der Erfindung sind in den Unteransprüchen angegeben.

Die erfindungsgemäße Vorrichtung zum Führen von Behältern weist einen flächigen Abschnitt mit einer Vielzahl von Durchbrüchen und / oder Ausnehmungen und einer Vielzahl von Haltevorrichtungen auf. Dabei ist jeweils mindestens eine Haltevorrichtung im Bereich eines Durchbruchs und /oder einer Ausnehmung angeordnet und jede Haltevorrichtung umfasst mindestens einen gebogenen Geländersteg, der an einem ersten Ende mit dem flächigen Abschnitt und an einem dem ersten Ende gegenüberliegenden zweiten Ende mit einem Geländerträger verbunden ist. Der Geländerträger weist mindestens einen Haltearm auf, der weitestgehend senkrecht zur Ebene des flächigen Abschnitts ausgerichtet ist. Zudem sind Führungsgeländer zum Führen von Behältern an den Haltearmen direkt angeordnet, wobei der flächige Abschnitt des Grundkörpers und die Haltevorrichtungen jeweils mit Geländersteg, Geländerträger und Haltearm einstückig ausgebildet sind.

Durch die einstückige Ausbildung ist die Herstellung der Vorrichtung zum Führen (im Weiteren auch Führungsvorrichtung) besonders einfach und schnell möglich, da bspw. die Montage der Vorrichtung aus Einzelteilen entfällt. Zudem ist auch die einfache und schnelle Reinigbarkeit der Vorrichtung gewährleistet, da aufgrund der Einstückigkeit wenig winklige oder schlecht zugängliche Bereiche vorliegen.

Der Grundkörper kann beliebig ausgeformt werden, ist vorzugsweise plattenförmig oder umfasst mindestens ein plattenförmiges Bauteil. Unter dem flächigen Abschnitt wird insbesondere ein Abschnitt mit einer weitestgehend ebenen Oberfläche verstanden, an der mehrere Haltevorrichtungen in Reihe (linear) hintereinander angeordnet werden können. Der flächige Abschnitt kann auch gebogen sein. Auch können mehrere Reihen von Haltevorrichtungen nebeneinander angeordnet werden. Unter hintereinander wird dabei in Längsachsenrichtung des Führungsgeländers verstanden. Unter nebeneinander kann somit eine Richtung quer zur Längsachsenrichtung des Führungsgeländers verstanden werden.

Durchbrüche sind bspw. Löcher, die den Grundkörper vollständig durchsetzen und keine Öffnung zur Außenkante haben. Eine Ausnehmung weist dagegen eine Öffnung zur Außenkante auf.

Die Haltevorrichtungen sind zur Aufnahme des Führungsgeländers vorgesehen, d.h., sie stehen mit dem Führungsgeländer im direkten Kontakt. Dieser erfolgt insbesondere über ihre Haltearme. Die Einstückigkeit des Grundkörpers und der Haltevorrichtung ergibt sich insbesondere dadurch, dass die Haltevorrichtungen und der Grundkörper aus demselben Werkstück herausgeformt wurden. Beim Erzeugen der Durchbrüche /Ausnehmungen wird die Haltevorrichtung in dem Werkstück (bzw. aus dem bereits ausgeformten Grundkörper) ausgeformt, insbesondere ausgestanzt oder ausgeschnitten. Dabei bleibt die Haltevorrichtung über ihren Geländersteg vorzugsweise immer, auch bei und nach der Herstellung, mit dem Grundkörper (bzw. dem Werkstückrest) in Verbindung.

Dementsprechend ist unter "im Bereich des Durchbruches/der Ausnehmung" zu verstehen, dass die Haltevorrichtung vor einem nachfolgend durchzuführenden Biegevorgang im Durchbruch bzw. in der Ausnehmung insbesondere flächenbündig mit der vorderseitigen und rückseitigen Oberfläche des Grundkörpers angeordnet ist und über eine Kante des Durchbruchs/der Ausnehmung mit dem Grundkörper verbunden ist.

Der Geländersteg wurde beim Erzeugen der Haltevorrichtung mit ausgestanzt/ausgeschnitten. Die Biegebewegung erfolgt in eine Richtung aus der Oberfläche des flächigen Abschnittes heraus. Vorzugsweise weist der Geländersteg in seiner Endposition einen Biegewinkel von ca. 90° auf, sodass zumindest die Haltearme der Haltevorrichtung weitestgehend senkrecht zur Ebene des flächigen Abschnittes, bspw. zur Oberfläche des flächigen Abschnittes angeordnet sind. Unter der Biegung des Geländerstegs kann verstanden werden, dass die mittlere Längsachse des Geländerstegs einen Radius aufweist und nicht gerade (linear) ist. Somit wird unter dem gebogenen Geländersteg gerade kein um seine Längsachse (bspw. schraubenförmig) verdrehter Geländersteg verstanden.

Das Führungsgeländer kann schienenartig ausgebildet sein. So kann es zum Einschieben in die hintereinander angeordneten Haltevorrichtungen vorgesehen sein. Dabei kann es Hinterschneidungen, Ausnehmungen, Nuten, Durchbrüche, Sacklöcher und/oder Rastaufnahmen zum Anordnen an dem mindestens einen Haltearm aufweisen. Das Führungsgeländer weist eine Anlagefläche bzw. Gleitfläche auf, an der die Behälter beim Transport entlanggleiten bzw. anliegen. Die Führungsgeländer können bspw. Kunststoff umfassen oder vollständig aus Kunststoff bestehen, während der Grundkörper und die Haltevorrichtung vorzugsweise aus Metall sind.

Nach einer Weiterbildung der Erfindung ist das Führungsgeländer ohne weitere separat ausgebildete Verbindungsmittel mit dem mindestens einen Haltearm verbunden. Hierdurch werden sowohl die Austauschbarkeit der Führungsgeländer als auch die Reinigbarkeit der gesamten Vorrichtung besonders einfach durchführbar, da gerade im Bereich von Verbindungsmitteln häufig Verschmutzungen nur schwer reinigbar sind und zudem der Austausch der Führungsgeländer, bspw. bei Abnutzung, ohne das zeitaufwendige Lösen von zahlreichen Verbindungsmitteln erfolgen kann.

Unter separaten Verbindungsmitteln werden weitere Bauteile verstanden, die nicht einstückig mit den Haltearmen und/oder dem Führungsgeländer ausgebildet sind. Somit ist das Führungsgeländer bspw. im direkten Kontakt mit dem Haltearmen. Es ist bspw. an dem mindestens einen Haltearm jeder Haltevorrichtung angeordnet.

Da keine weiteren Verbindungsmittel wie beispielsweise Schrauben oder Haftmittel verwendet werden, ist bevorzugt eine klemmende oder verrastende Verbindung zwischen den Haltearmen der Haltevorrichtung und dem Führungsgeländer ausgebildet. Entsprechende Rastmittel können bspw. aus dem Haltearm und/oder dem Führungsgeländer selbst herausgebildet sein. So kann das Führungsgeländer bspw. auf den Haltearm oder die Haltearme aufsteckbar ausgebildet sein und hierfür entsprechend Nuten/Ausnehmungen, Sacklöcher und/oder Durchbrüche aufweisen. Bei der Anordnung von mehreren Haltearmen an einer Haltevorrichtung kann das Führungsgeländer bspw. auch zwischen zwei oder mehr Haltearmen angeordnet werden, bspw. Zwischen diesen Haltearmen einklemmbar sein. Hierdurch wird die Reinigbarkeit der Führungsvorrichtung weiter verbessert.

Für eine besonders einfache Verbindung zwischen dem Führungsgeländer und den Haltearmen des Geländerträgers ist nach einer Weiterbildung der Erfindung vorgesehen, dass der Geländerträger zwei Haltearme aufweist, von denen einer einstückig mit einem ersten Geländersteg der jeweiligen Haltevorrichtung ausgebildet ist und der andere einstückig mit einem zweiten Geländersteg der jeweiligen Haltevorrichtung ausgebildet ist, wobei das Führungsgeländer insbesondere zwischen den Haltearmen angeordnet ist. Hierdurch wird eine sichere Lagerung des Führungsgeländers deutlich verbessert. Zur weiteren Verbesserung der Stabilität kann der Geländerträger auch mehr als zwei Haltearme zum Verbinden mit dem einen Führungsgeländer aufweisen. Die mindestens zwei Haltearme können vorzugsweise in Richtung quer zur Längsrichtung des Führungsgeländers nebeneinander angeordnet werden.

Besonders bevorzugt kann der Geländerträger auch dazu ausgebildet sein, dass zwei oder mehr Führungsgeländer, beispielsweise parallel nebeneinander, an ihm befestigt werden. Hierfür kann der Geländerträger beispielsweise zwei Haltearme aufweisen, wobei jeweils ein Haltearm mit einem Führungsgeländer verbunden wird. Auch diese Haltearme sind vorzugsweise in Richtung quer zur Längsrichtung des Führungsgeländers nebeneinander angeordnet. Auch kann der Geländerträger mehr als zwei Haltearme, beispielsweise vier Haltearme, umfassen. Dabei können jeweils zwei Haltearme mit jeweils einem Führungsgeländer gekoppelt sein. Denkbar ist auch eine Variante mit drei Haltearmen, bei der am mittleren Haltearm zwei Führungsgeländer anliegen.

Zur Verbesserung der Stabilität der Haltevorrichtung ist nach einer Weiterbildung der Erfindung vorgesehen, dass die Haltevorrichtung eine die zwei Haltearme und/oder zwei Geländerstege verbindende Geländerbrücke aufweist. Die Geländerbrücke ist mit den beiden Haltearmen und/oder mit den beiden Geländerstegen verbunden. Die Geländerbrücke ist Teil der Haltevorrichtung und somit ebenfalls einstückig mit den Haltearmen, Geländerstegen und dem Grundkörper ausgebildet.

Um die Positionierung des Führungsgeländers an den Haltearmen zu verbessern, umfassen die Haltearme besonders bevorzugt ein Auflager zum Anordnen des Führungsgeländers. Das Auflager dient zum Anlegen des Führungsgeländers. So kann das Auflager beispielsweise als Ausnehmung oder Vorsprung am Haltearm ausgebildet sein. Besonders bevorzugt ist die Geländerbrücke als Auflager ausgebildet, sodass das Führungsgeländer an der zwischen zwei Haltearmen oder zwischen zwei Geländerstegen ausgebildeten Geländerbrücke anliegt und beispielsweise mit den freien Enden der Haltearm gehalten wird.

Die Anordnung der Vorrichtung zum Führen der Behälter, d.h., der Führungsvorrichtung für die Behälter erfolgt besonders bevorzugt in einer Behälterbehandlungsanlage. Hier kann die Vorrichtung zum Führen von Behältern sowohl an einzelnen Arbeitsstationen wie beispielsweise Reinigungsvorrichtungen, Füllern oder Rinsern eingesetzt werden als auch in den Transportbereichen zwischen den einzelnen Arbeitsstationen der Behälterbehandlungsanlage. Besonders bevorzugt erfolgt der Einsatz der Vorrichtung zum Führen von Behältern in einem in der Behälterbehandlungsanlage angeordneten Behälterstopper, insbesondere einem Flaschenstopper. Aufgrund ihrer geringen Bautiefe liegen der Drehpunkt eines Stopperarms und die Anlagefläche des Führungsgeländers besonders dicht beieinander. Hierdurch werden die Belastungen auf dem Behälterstopper gering gehalten und der Stopperarm kann eine besonders kurze Bewegungsbahn aufweisen.

Weiter wird die Aufgabe gelöst durch ein Verfahren zum Herstellen einer Vorrichtung zum Führen von Behältern mit den Schritten: Bereitstellen eines Grundkörpers mit einem flächigen Abschnitt, Herstellen von Durchbrüchen und/oder Ausnehmungen in dem flächigen Abschnitt, wobei im Bereich jedes Durchbruchs/ jeder Ausnehmung mindestens eine Haltevorrichtung für Behälterführungsgeländer erzeugt wird, wobei jede Haltevorrichtung mindestens einen mit einer Grundkörperkante der Ausnehmung verbundenen Geländersteg mit einem Geländerträger umfasst, Ansetzen einer Biegevorrichtung an der Haltevorrichtung, Umbiegen der Haltevorrichtung im Bereich des Geländerstegs, wobei mindestens ein Haltearm weitestgehend senkrecht zur Ebene des flächigen Abschnittes positioniert wird und ein Geländersteg einen bogenförmigen Abschnitt erhält, und Anordnen eines Führungsgeländers zum Führen von Behältern direkt an den Haltearmen.

Der Grundkörper besteht vorzugsweise aus Metall. Dementsprechend erfolgt das Herstellen der Durchbrüche und/oder Ausnehmungen bspw. mittels eines Schneidverfahrens oder Stanzverfahrens. Bevorzugt wird ein Laserschneidverfahren verwendet, da hierdurch eine besonders präzise Herstellung der Durchbrüche/Ausnehmungen und der Haltevorrichtung möglich ist. Zudem ist der Nacharbeitungsaufwand bei einem Laserschneidverfahren begrenzt. Die Durchbrüche/Ausnehmungen und Haltevorrichtungen, die zur Aufnahme eines Führungsgeländers vorgesehen sind, werden dabei vorzugsweise entlang einer Geraden (linear) hintereinander angeordnet.

Nach dem Ausformen der Durchbrüche und/oder Ausnehmungen und der Haltevorrichtungen wird die Haltevorrichtung abschnittsweise umgebogen, d.h., die ausgeformten Geländerstege werden bspw. plastisch verformt, so dass sie eine bogenförmige Form einnehmen. Dabei erhalten die Geländerstege bevorzugt einen Winkel von ca. 90°, sodass zumindest der Haltearm ggf. auch die Geländerträger mit den Geländerbrücken senkrecht zur Ebene des flächigen Abschnitts ausgerichtet werden. Aufgrund der linearen Anordnung der Haltevorrichtungen können die Führungsgeländer nach dem Biegevorgang sämtlicher Haltevorrichtungen einer Reihe auf bzw., zwischen die senkrecht stehenden Haltearme der Haltevorrichtungen geschoben werden.

Nach einer Weiterbildung der Erfindung erfolgt das Umbiegen der Haltevorrichtung mittels einer Biegevorrichtung, die bspw. ein Biegewerkzeug wie einen Biegehebel umfasst oder als Biegewerkzeug bzw. Biegehebel ausgebildet ist. Die Biegevorrichtung kann die Haltearme ausgehend von der Rückseite aus dem flächigen Abschnitt herausdrücken. Dabei wird beispielsweise die Biegevorrichtung als Biegehebel ausgebildet, der ausgehend von der Rückseite des flächigen Abschnittes an einer zwei Haltearme verbindenden Geländerbrücke angesetzt und in Richtung auf die rückseitige Oberfläche des Grundkörpers bewegt wird. Dabei wird die Haltevorrichtung von einer Ausgangsposition, in der sie weitestgehend flächenbündig mit dem flächigen Abschnitt angeordnet ist, in ihre Endposition (bspw. senkrecht zur Oberfläche des flächigen Abschnitts) bewegt. Das Umbiegen der Haltevorrichtung im Bereich des Geländerstegs erfolgt somit mittels der Bewegung der Biegevorrichtung.

Alternativ zum Herausdrücken der Haltevorrichtung ist nach einer Weiterbildung der Erfindung vorgesehen, dass das Umbiegen der Haltevorrichtung mittels einer Biegevorrichtung erfolgt, die die Haltearme ausgehend von der Vorderseite des flächigen Abschnitts herauszieht.

Hierbei kann die Biegevorrichtung bspw. ebenfalls als Biegehebel ausgebildet sein. Ausgehend von der Vorderseite des flächigen Abschnittes wird der Biegehebel mit einem freien Ende in den Durchbruch eingeführt und die Haltevorrichtung bspw. hintergreifend angesetzt. Anschließend wird die Biegevorrichtung sich abstützend an einer Kante des Durchbruchs in Richtung der Oberfläche der Vorderseite des flächigen Abschnitts bewegt, sodass die Haltevorrichtung von der Ausgangsposition (flächenbündig mit dem flächigen Abschnitt) aus der Oberfläche des flächigen Abschnitts herausbewegt wird. Nachfolgend wird ein Greifabschnitt einer Biegevorrichtung im Bereich des freien Endes der Haltevorrichtung bspw. mittels einer Nut angeordnet und über eine Schwenkbewegung der Biegevorrichtung in Richtung des dem freien Ende gegenüberliegenden Endes die Haltevorrichtung in ihre Endposition verbogen.

Das Umbiegen der Haltevorrichtung kann maschinell erfolgen, erfolgt besonders bevorzugt jedoch händisch unter Zuhilfenahme einer manuell bedienbaren Biegevorrichtung, insbesondere eines Biegehebels. Hierdurch sind insbesondere Kleinserien und Ersatzteile einfach herstellbar und Reparaturen, bzw. Nachjustierungen (Wartung) der Haltevorrichtung problemlos und schnell durchführbar.

Weiter wird die Erfindung anhand von mehreren Ausführungsbeispielen dargestellt. Es zeigen:
- Fig. 1: in einer perspektivischen Darstellung einen Ausschnitt eines Grundkörpers mit Haltevorrichtungen;
- Fig. 2: ain einer perspektivischen Darstellung einen Ausschnitt eines Grundkörpers und eine erste Biegevorrichtung in einer Ausgangsposition;
- Fig.: 2bdie Darstellung aus Figur 2a mit dem Biegevorrichtung in einer Endposition;
- Fig. 3: ain einer perspektivischen Darstellung einen Ausschnitt eines Grundkörpers mit einer zweiten Biegevorrichtung;

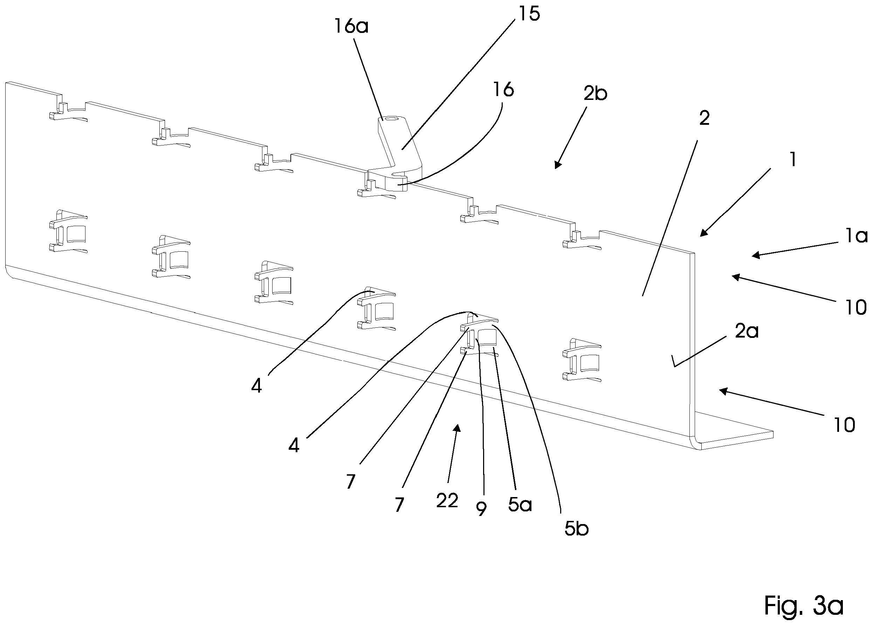

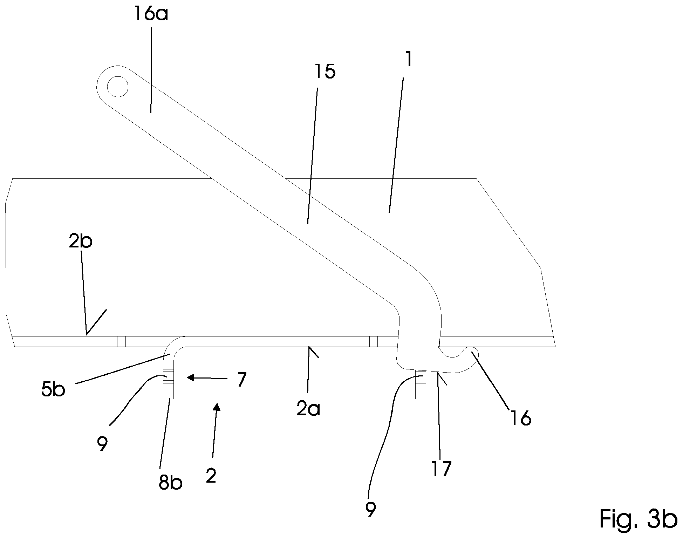

- Fig. 3: bin einem horizontalen Schnitt die Darstellung aus Figur 3a;

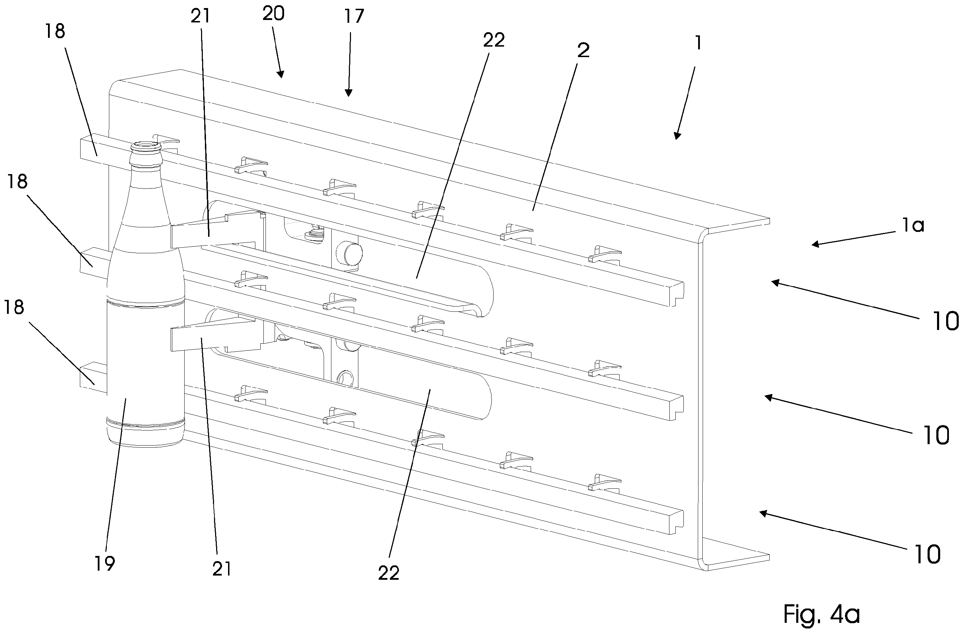

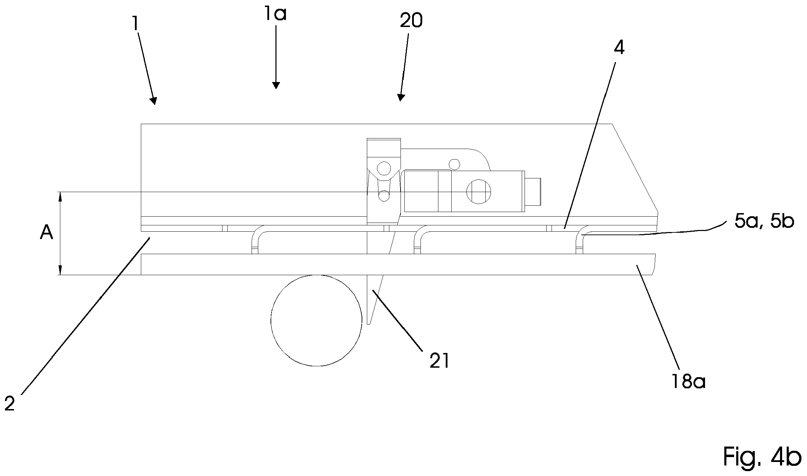

- Fig. 4: ain einer perspektivischen Darstellung eine Vorrichtung zum Führen von Behältern mit einem Behälterstopper;
- Fig. 4b: in einem horizontalen Schnitt die Darstellung aus Figur 4a.

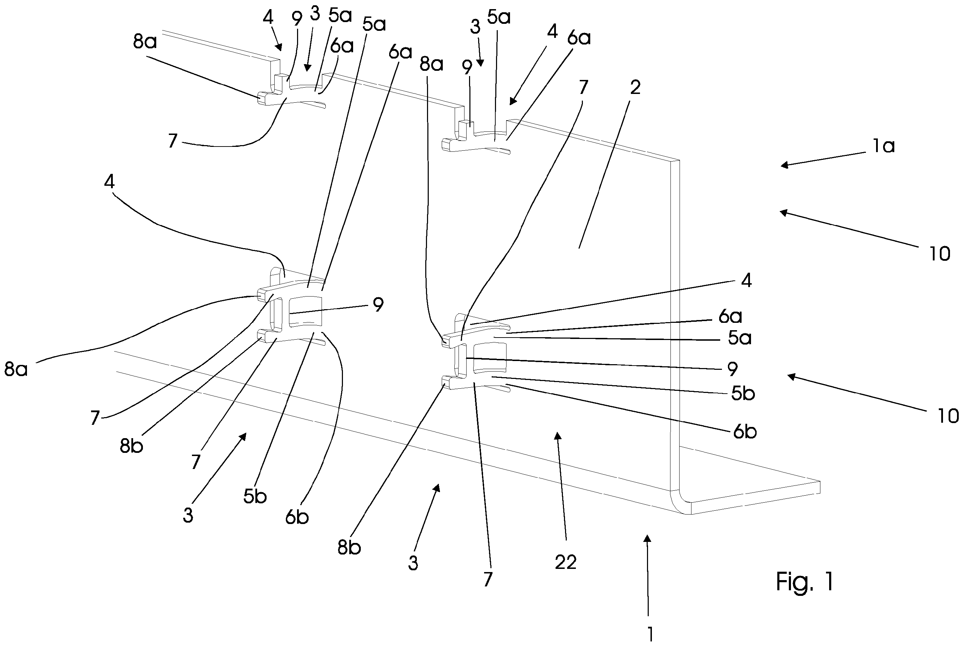

Figur 1 zeigt einen Grundkörper 1 mit einem flächigen Abschnitt 2. Der Grundkörper 1 weist zwei Reihen 10 von Haltevorrichtungen 3 auf, die in ihrer Endposition dargestellt sind. Die Reihen 10 sind nebeneinander angeordnet. Die Haltevorrichtungen 3 einer Reihe 10 sind jeweils linear hintereinander angeordnet.

Die obere Reihe 10 der Haltevorrichtung 3 ist nur als Ausschnitt dargestellt, sodass die Haltevorrichtungen 3 der oberen Reihe 10 nur halb abgebildet sind. Jede Haltevorrichtung 3 ist in einem Durchbruch 4 durch den Grundkörper 1 ausgebildet. Alternativ könnten die Haltevorrichtungen 3 auch im Bereich einer Ausnehmung (hier nicht dargestellt), d. h. in einem Randbereich des Grundkörpers 1, der zu mindestens einer Seite offen ist, angeordnet sein.

Jede Haltevorrichtung 3 weist zwei gebogene Geländerstege 5a, 5b und einen Geländerträger 22 auf. Jeder Geländersteg 5a, 5b weist einen Biegewinkel von ca. 90° auf, sodass die Haltearme 7 weitestgehend senkrecht zur Oberfläche 2a des flächigen Abschnitts 2, d.h. hier auch senkrecht zur Ebene (hier nicht dargestellt) des flächigen Abschnitts 2, ausgerichtet sind. Zudem ist jeder Geländersteg 5a, 5b mit einen ersten Ende 6a, 6b jeweils mit dem flächigen Abschnitt 2 einstückig verbunden. An dem, dem ersten Ende 6a, 6b gegenüberliegenden Ende schließt sich ein Geländerträger 22 mit jeweils zwei Haltearmen 7 an, die jeweils ein freies Ende 8 aufweisen. Die beiden Haltearme 7 einer Haltevorrichtung 3 sind über eine Geländerbrücke 9, die zum Geländerträger 22 gehört, miteinander verbunden.

Der Grundkörper 1 und die Haltevorrichtung 3 mit dem Geländerträger 22, Geländerstegen5a, 5b, den Haltearmen 7 und den Geländerbrücken 9 sind einstückig ausgeformt, d. h., sie wurden aus einem einzelnen Werkstück hergestellt. Dabei wurden die einzelnen Bauteile immer einstückig belassen, d.h., sie lagen niemals als separate Bauteile vor und wurden somit und nicht nachträglich miteinander verbunden.

Die jeweils in einer Reihe 10 angeordneten Haltevorrichtungen 3 sind zum Einschieben eines Führungsgeländers 18 (siehe Figur 4a und Figur 4b) ausgebildet. Die Haltevorrichtungen 3 einer Reihe 10 sind in Längsachsenrichtung des Führungsgeländers 18 hintereinander angeordnet.

Die Geländerbrücke 9 ist hier als Auflager ausgebildet, sodass das eingeschobene Führungsgeländer 18 auf der Geländerbrücke 9 aufliegt. Alternativ kann die Geländerbrücke 9 auch als ausschließliches Verbindungselement und nicht als Auflager ausgebildet sein. Die Haltearme 7 sind an ihren freien Enden 8a, 8b jeweils verdickt, d. h. (quer zur Längsachsenrichtung) breiter ausgebildet, sodass das Führungsgeländer 18 mittels der freien Enden 8a, 8b an den Haltevorrichtungen 3 befestigt ist. Weitere separate Verbindungsmittel, wie bspw. mechanische Verbindungsmittel (Schrauben etc.) oder Haftmittel werden zum Verbinden und Befestigen des Führungsgeländers 18 an den Haltevorrichtungen 3 nicht eingesetzt. Die Haltearme 7 und die Geländerbrücke 9 einer Haltevorrichtung 3 bilden ein u-förmiges Profil aus.

Alternativ kann eine Haltevorrichtung 3 bspw. auch nur einen Geländersteg 5a, 5b und einen Geländerträger 22 mit nur einem (bspw. stiftartigen) Haltearm 7 aufweisen. Dabei kann das Führungsgeländer 18 zum Aufschieben auf diesen bspw. stiftartig ausgebildeten Haltearm 7 ausgebildet sein. Auch kann jede Haltevorrichtung 3 bspw. einen Geländerträger 22 mit mehr als zwei Haltearmen 7, bspw. mit drei oder vier Haltearmen 7 aufweisen, sodass mehrere Führungsgeländer 18 jeweils an einer Haltevorrichtung 3 angeordnet werden können.

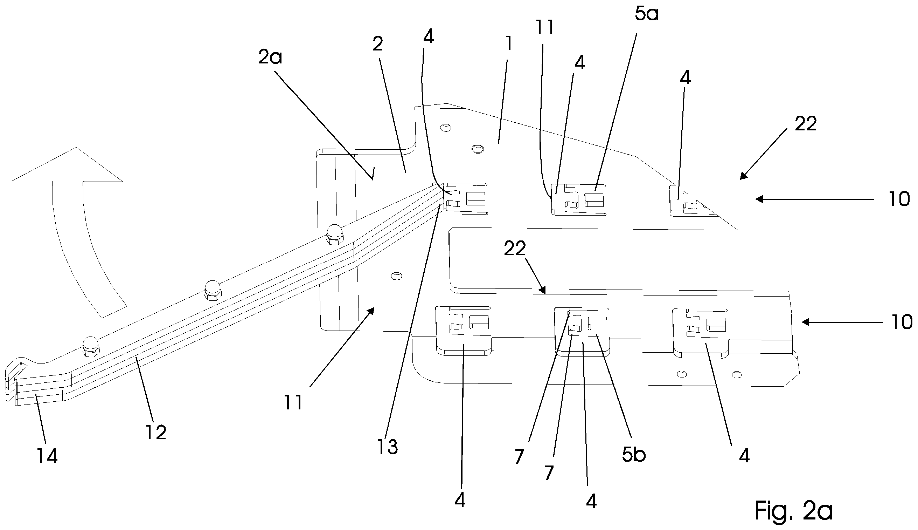

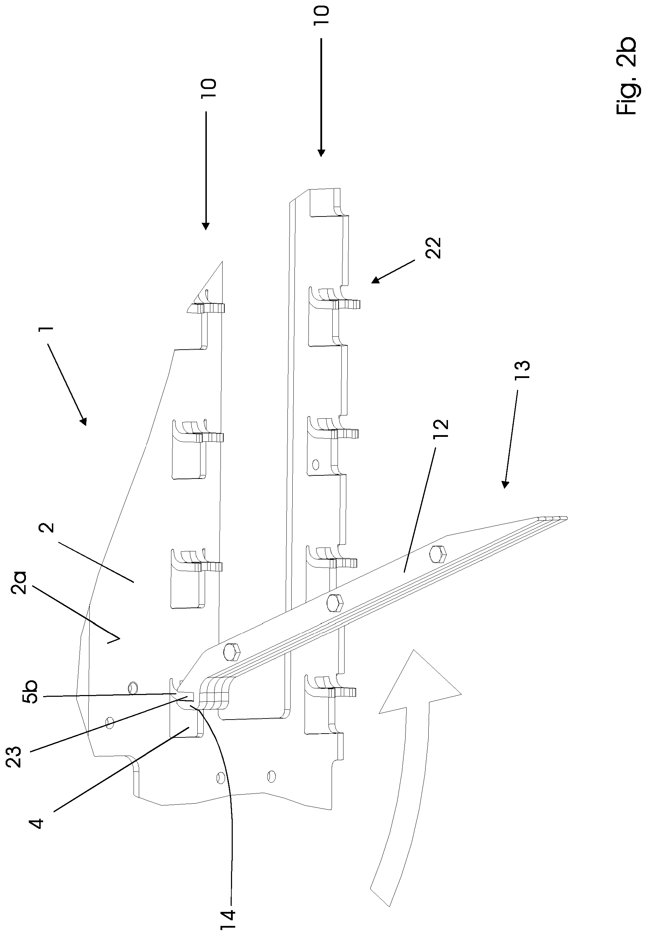

Figur 2a und 2b zeigen eine Biegevorrichtung, hier ein als Biegehebel ausgebildetes erstes Biegewerkzeug 12 zum Umbiegen der Haltevorrichtungen 3 von ihrer Ausgangsposition (Figur 2a) in ihre Endposition (Figur 2b). Dabei erfolgt der Biegevorgang insbesondere als zweiteilige Biegebewegung, bei der zwei Abschnitte des Biegewerkzeuges 12 oder zwei unterschiedliche Biegewerkzeuge verwendet werden. In Figur 2a ist ein Grundkörper 1 dargestellt, in dem die Durchbrüche 4 mit den Haltevorrichtungen 3 in einer Ausgangsposition bereits ausgeformt wurden. Die Haltevorrichtungen 3 sind entsprechend der Figur 1 ausgebildet.

Zum Aufstellen der Haltevorrichtung 3 in eine Endposition 90° zur Ebene des flächigen Abschnitts 2 wird das erste Biegewerkzeug 12 mit einem ersten Ende 13 in einen Durchbruch 4 eingeführt, sodass es mit dem ersten Ende 13 an den freien Enden 8a, 8b der Haltearme 7 hinter greift und sich an einer Kante 11 des Durchbruchs 4 abstützt.

Zum Aufstellen der Haltevorrichtung 3 wird das Biegewerkzeug 12 mit seinem dem ersten Ende 13 gegenüberliegenden zweiten Ende 14 in Richtung der vorderseitigen Oberfläche 2a des flächigen Abschnitts 2 derart bewegt, dass sich die Haltevorrichtung 3 geringfügig aus der vorderseitigen Oberfläche 2a herausstellt. Im zweiten Schritt (siehe Figur 2b) werden die freien Enden 8a, 8b von einem Greifwerkzeug 14 erfasst und in ihre Endposition, hier bspw. 90° zur Oberfläche 2a des flächigen Abschnitts 2, gebogen. Das Greifwerkzeug 14 kann bspw. an dem ersten Biegewerkzeug 12 angeordnet sein, bspw. an dem, dem ersten Ende 13 gegenüberliegenden zweiten Ende. Auch kann es an einem separaten Biegewerkzeug (hier nicht dargestellt) angeordnet sein. Das Greifwerkzeug 14 ist hier in Form einer schlitzartigen Ausnehmung 23 bzw. einer Nut, die auf die freien Enden 8a, 8b der Haltevorrichtung 3 aufgesteckt werden kann, ausgebildet.

Die Figuren 3a und 3b zeigen eine weitere Biegevorrichtung, hier ebenfalls ein als Biegehebel ausgebildetes zweites Biegewerkzeug 15 für ein zweites Biegeverfahren, mit dem eine einteilige Biegebewegung zum Aufstellen der Haltevorrichtung 3 aus ihrer Ausgangsposition (flächenbündig mit den Oberflächen 2a, 2b des flächigen Abschnittes 2) in Ihre Endposition (hier 90° zur Oberfläche des flächigen Abschnitts 2) durchgeführt werden kann. Beide Figuren 3a, 3b zeigen dabei eine Haltevorrichtung 3 in ihrer Endposition mit noch an der Haltevorrichtung 3 angesetztem zweitem Biegewerkzeug 15.

Bei dem zweiten Biegeverfahren erfolgt das Aufstellen ausgehend von der Rückseite 1a des Grundkörpers 1. Hierfür wird das zweite Biegewerkzeug 15 mit einem hakenartigen freien Ende 16 von der Rückseite 1a durch den Durchbruch 4 hindurchbewegt. Das hakenartige freie Ende 16 des zweiten Werkzeugs 15 wird dabei auf der vorderseitigen Oberfläche 2a des flächigen Abschnitts 2 abgestützt. Das zweite Werkzeug 15 greift mit einer Anlagefläche 17 im Bereich der Geländerbrücke 9 an, die zwei Haltearme 7 verbindet. Zum Aufstellen der Haltevorrichtung 3 in ihre Endposition wird das dem hakenartigen Ende 16 des zweiten Biegewerkzeuges 15 gegenüberliegende freie zweite Ende 16a in Richtung der rückseitigen Oberfläche 2b des Grundkörpers 1 bewegt. Mit der Bewegung wird die Haltevorrichtung 3 aus der vorderseitigen Oberfläche 2a herausgedrückt und in ihre Endposition, hier ein 90°-Biegewinkel zwischen dem Haltearm 7 und der vorderseitigen Oberfläche 2a des flächigen Abschnitts 2, aufgerichtet.

Während mit dem ersten, hier zweiteiligen Biegeverfahren, die Haltevorrichtungen 3 aus dem Durchbruch 4 herausgezogen werden, werden die Haltevorrichtungen 3 mit dem zweiten, hier einteiligen Biegeverfahren aus dem Durchbruch 4 herausgedrückt. Während das erste Biegeverfahren bspw. den Vorteil aufweist, dass es sowohl bei Haltevorrichtungen 3 mit einem oder mehreren Halteramen 7 verwendet werden kann, liegt ein besonderer Vorteil des zweiten Biegeverfahrens darin, dass eine unbeabsichtigte Verformung der Haltearme 7, die ggf. das Einschieben des Führungsgeländers 18 erschweren könnte, verhindert wird. Beide Biegevorgänge können maschinell durchgeführt werden. Dies erfolgt insbesondere im Großserienbau. Alternativ können die Biegewerkzeuge 12, 15 auch, wie abgebildet, als manuell bedienbare, d. h. von einer Person händisch handhabbare Biegewerkzeuge 12, 15, ausgebildet sein. Die händisch handhabbaren Biegewerkzeuge 12, 15 gewährleisten dabei eine besonders hohe Präzision, sodass ein zusätzliches Nacharbeiten oder Ausrichten der Haltevorrichtungen 3 weitestgehend entfällt. Insbesondere bei der Einzelherstellung können mittels der händisch handhabbaren Biegewerkzeuge 12, 15 sehr individuelle Vorrichtungen zum Führen von Behältern 19 schnell und unproblematisch erstellt werden. Auch die Ersatzteilversorgung ist aufgrund der händischen Aufstellung besonders einfach regelbar. Die Biegewerkzeuge 12, 15 können wie in den Figuren 2a-3b dargestellt als Biegevorrichtungen verstanden werden oder alternativ als Teil einer Biegevorrichtung ausgebildet sein.

Figur 4a und Figur 4b zeigen die Vorrichtung zum Führen von Behältern 19 in Kombination mit einem Behälterstopper 20. Dabei weist die Führungsvorrichtung 17 einen Grundkörper 1 mit einem flächigen Abschnitt 2 auf. In dem Grundkörper 1 sind hier drei lineare Reihen 10 mit Haltevorrichtungen 3 angeordnet. Die Haltevorrichtungen 3 sind entsprechend den Figuren 1-3b ausgebildet. In die Haltevorrichtungen 3 einer Reihe 10 ist jeweils ein Führungsgeländer 18 eingeschoben. Die Führungsgeländer 18 sind mit den Haltevorrichtungen 3 ohne weitere separate Verbindungsmittel verbunden, d. h., sie halten an den Haltevorrichtungen 3 ausschließlich aufgrund der Geometrie der Haltearme 7 und der darauf angepassten Geometrie der Führungsgeländer 18.

Weiter zeigen Figur 4a und 4b einen Behälter 19, hier eine Flasche, der an zwei Stopperarmen 21 anliegt. Für die zwei Stopperarme 21 des Behälterstoppers 20 sind zwei weitere Durchbrüche 22 im Grundkörper 1 angeordnet, durch die die Stopperarme 21 ausgehend von der Rückseite des Grundkörpers 1 hindurchragen. Der Behälterstopper 20 ist dabei rückseitig am Grundkörper 1 angeordnet und kann in Längsachsenrichtung der Führungsgeländer 18 verschoben werden.

Die Stopperarme 21 können zwischen einer hier dargestellten Stopp-Position, an der der Behälter 19 an den Stopperarmen 21 anliegt und einer Freigabeposition, an der der Behälter 19 an den Führungsgeländern 18 entlang gleitet, verstellt werden. Die Vorrichtung zum Führen der Behälter 19 ermöglicht eine besonders geringe Bautiefe, sodass der Abstand A zwischen dem Führungsgeländer 18 und dem Drehpunkt der Stopperarme 21 besonders gering ist. Hierdurch können die Stopperarme 21 besonders kurz ausgebildet werden und die betriebsbedingten Belastungen auf den Behälterstopper 20 sind gering.

Die in den Figuren 1 bis 4b dargestellten Grundkörper 1 mit Haltevorrichtungen 3, bestehen aus Metall, können alternativ aber bspw. auch aus Kunststoff hergestellt sein oder Metall und/oder Kunststoff umfassen. Die Führungsgeländer 18 bestehen aus Kunststoff, können alternativ aber auch bspw. aus Metall bestehen oder Metall und/oder Kunststoff umfassen.

### Bezugszeichenliste

- 1: Grundkörper
- 1a: Rückseite
- 2: flächiger Abschnitt
- 2a: rückseitige Oberfläche
- 2b: vorderseitige Oberfläche
- 3: Haltevorrichtung
- 4: Durchbruch
- 5a,5b: Geländersteg
- 6a,6b: erstes Ende
- 7: Haltearm
- 8a,8b: freies Ende Haltearm
- 9: Geländerbrücke
- 10: Reihe
- 11: Kante Durchbruch
- 12: erstes Biegewerkzeug
- 13: erstes Ende erstes Biegewerkzeug
- 14: Greifwerkzeug
- 15: zweites Biegewerkzeug
- 16: hakenartiges freies Ende
- 16a: freies Ende zweites Biegewerkzeug
- 17: Führungsvorrichtung
- 18: Führungsgeländer
- 19: Behälter
- 20: Behälterstopper
- 21.: Stopperarm
- 22: Geländerträger
- 23: schlitzartige Ausnehmung

## Patentansprüche

1. Vorrichtung zum Führen von Behältern (19) mit
• einem Grundkörper (1), der einen flächigen Abschnitt (2) mit einer Vielzahl von Durchbrüchen (4) und/oder Ausnehmungen aufweist, und
• einer Vielzahl von Haltevorrichtungen (3), wobei jeweils mindestens eine Haltevorrichtung (3) im Bereich eines Durchbruches (4) und/oder einer Ausnehmung angeordnet ist,
• wobei jede Haltevorrichtung (3) mindestens einen gebogenen Geländersteg (5a, 5b) umfasst, der an einem ersten Ende (6a, 6b) mit dem flächigen Abschnitt (2) und an einem dem ersten Ende (6a, 6b) gegenüberliegenden zweiten Ende mit einem Geländerträger (22) verbunden ist,
• wobei der Geländerträger (22) mindestens einen Haltearm (7) aufweist, der weitestgehend senkrecht zur Ebene des flächigen Abschnitts (2) ausgerichtet ist, und
• wobei der flächige Abschnitt (2) des Grundkörpers (1) und die Haltevorrichtungen (3) mit Geländersteg (5a, 5b), Geländerträger (22) und Haltearm (7) einstückig ausgebildet sind, wobei ein Führungsgeländer (18) zum Führen von Behältern (19) direkt an den Haltearmen (7) angeordnet ist.

2. Vorrichtung nach Anspruch 1, **dadurch gekennzeichnet, dass** das Führungsgeländer (18) ohne weitere separat ausgebildete Verbindungsmittel mit dem mindestens einen Haltearm (7) verbunden ist.

3. Vorrichtung nach Anspruch 1 oder 2, **dadurch gekennzeichnet, dass** der Geländerträger (22) zwei Haltearme (7) aufweist, von denen einer einstückig mit einem ersten Geländersteg (5a) der jeweiligen Haltevorrichtung (3) ausgebildet ist und der andere einstückig mit einem zweiten Geländersteg (5b) der jeweiligen Haltevorrichtung (3) ausgebildet ist, wobei das Führungsgeländer (18) insbesondere zwischen den Haltearmen (7) angeordnet ist.

4. Vorrichtung nach einem der vorhergehenden Ansprüche, **dadurch gekennzeichnet, dass** am Geländerträger (22) zwei oder mehr Führungsgeländer (18), insbesondere parallel nebeneinander, befestigt sind.

5. Vorrichtung nach einem der vorhergehenden Ansprüche in Kombination mit Anspruch 3, **dadurch gekennzeichnet, dass** die Haltevorrichtung (3) eine die zwei Haltearme (7) und/oder zwei Geländerstege (5a, 5b) verbindende Geländerbrücke (9) aufweist.

6. Vorrichtung nach einem der vorhergehenden Ansprüche, **dadurch gekennzeichnet, dass** der Haltearm (7) ein Auflager zum Anordnen des Führungsgeländers (18) umfasst.

7. Vorrichtung nach einem der vorhergehenden Ansprüche, **dadurch gekennzeichnet, dass** das Führungsgeländer (18) auf der als Auflager ausgebildeten Geländerbrücke (9) zumindest abschnittsweise aufliegt.

8. Behälterbehandlungsanlage mit einer Vorrichtung zum Führen von Behältern (19) nach Anspruch 1.

9. Behälterbehandlungsanlage nach Anspruch 8, **dadurch gekennzeichnet, dass** die Vorrichtung zum Führen von Behältern (19) in einem Behälterstopper (20) angeordnet ist.

10. Verfahren zum Herstellen einer Vorrichtung zum Führen von Behältern (19) mit den Schritten:
• Bereitstellen eines Grundkörpers (1) mit einem flächigen Abschnitt (2),
• Herstellen von Durchbrüchen (4) und/oder Ausnehmungen in dem flächigen Abschnitt (4), wobei im Bereich jedes Durchbruchs (4) / jeder Ausnehmung mindestens eine Haltevorrichtung (3) für Behälterführungsgeländer (18) erzeugt wird, und jede Haltevorrichtung (3) mindestens einen mit dem Grundkörper (1) verbundenen Geländersteg (5a, 5b) und einen Geländerträger (22) mit Haltearm (7) umfasst,
• Ansetzen einer Biegevorrichtung an der Haltevorrichtung (3),
• Umbiegen der Haltevorrichtung (3) im Bereich des Geländerstegs (5a, 5b), wobei mindestens ein Haltearm (7) weitestgehend senkrecht zu Ebene des flächigen Abschnittes (2) positioniert wird und ein Geländersteg (5a, 5b) einen bogenförmigen Abschnitt erhält,
• Anordnen eines Führungsgeländers (18) zum Führen von Behältern (19) direkt an den Haltearmen (7).

11. Verfahren nach Anspruch 10, **dadurch gekennzeichnet, dass** das Umbiegen ausgehend von einer Rückseite (2b) des Grundkörpers (2) mittels einer Biegevorrichtung erfolgt, die die Haltearme (7) ausgehend von der Rückseite (2b) aus der vorderseitigen Oberfläche (2a) des flächigen Anschnitts (2) herausdrückt.

12. Verfahren nach Anspruch 10, **dadurch gekennzeichnet, dass** das Umbiegen der Haltevorrichtung mittels einer Biegevorrichtung erfolgt, die die Haltearme ausgehend von der vorderseitigen Oberfläche (2a) des flächigen Abschnitts (2) herauszieht.

13. Verfahren nach mindestens einem der Ansprüche 10 bis 12, **dadurch gekennzeichnet, dass** das Umbiegen der Haltevorrichtung händisch unter Zuhilfenahme einer manuell bedienbaren Biegevorrichtung, insbesondere eines Biegehebels, erfolgt.

## Claims

1. Apparatus for guiding containers (19) with
• a main body (1), which has a flat portion (2) with a multiplicity of through-passages (4) and/or recesses, and
• a multiplicity of retaining means (3), wherein in each case at least one retaining means (3) is arranged in the region of a through-passage (4) and/or a recess,
• wherein each retaining device (3) comprises at least one curved rail web (5a, 5b), which is connected at a first end (6a, 6b) with the flat portion (2) and at a second end, opposite the first end (6a, 6b), with a rail carrier (22),
• wherein the rail carrier (22) comprises at least one retaining arm (7), which is aligned as far as possible perpendicular to the plane of the flat portion (2), and
• wherein the flat portion (2) of the main body (1) and the retaining means (3) with the rail web (5a, 5b), the rail carrier (22), and the retaining arm (7) are formed in one piece,
• wherein a guide rail (18) for guiding containers (19) is arranged directly on the retaining arms (7).

2. Apparatus according to claim 1, **characterised in that** the guide rail (18) is connected to the at least one retaining arm (7) without any further separately formed connecting means.

3. Apparatus according to claim 1 or 2, **characterised in that** the rail carrier (22) has two retaining arms (7), of which one is formed as one piece with a first rail web (5a) of the respective retaining means (3), and the other is formed as one piece with a second rail web (5b) of the respective retaining means (3), wherein the guide rail (18) is in particular arranged between the retaining arms (7).

4. Apparatus according to any one of the preceding claims, **characterised in that** two or more guide rails (18) are secured to the rail carrier (22), in particular parallel to one another.

5. Apparatus according to any one of the preceding claims in combination with claim 3, **characterised in that** the retaining means (3) comprises a rail bridge (9) connecting the two retaining arms (7) and/or two rail webs (5a, 5b).

6. Apparatus according to any one of the preceding claims, **characterised in that** the retaining arm (7) comprises a support for arranging the guide rails (18).

7. Apparatus according to any one of the preceding claims, **characterised in that** the guide rail (18) lies at least in sections on the rail bridge (9) formed as a support.

8. Container handling system with an apparatus for guiding containers (19) in accordance with claim 1.

9. Container handling system according to claim 8, **characterised in that** the apparatus for guiding containers (19) is arranged in a container stopper (20).

10. Method for producing an apparatus for guiding containers (19), with the steps:
• provision of a main body (1) with a flat portion (2),
• producing through-passages (4) and/or recesses in the flat portion (4), wherein, in the region of each through-passage (4)/each recess, at least one retaining device (3) is produced for container guide rails (18), and each retaining device (3) comprises at least one rail web (5a, 5b), connected to the main body (1), and a rail carrier (22) with retaining arm (7),
• placing a bending apparatus at the retaining means (3),
• bending the retaining means (3) in the region of the rail web (5a, 5b), wherein at least one retaining arm (7) is positioned as far as possible perpendicular to the plane of the flat portion (2) and a rail web (5a, 5b) receives a bow-shaped portion,
• arrangement of a guide rail (18) for guiding containers (19) directly to the retaining arms (7).

11. Method in accordance with claim 10, **characterised in that** the bending takes place starting from a rear side (2b) of the main body (2) by means of a bending apparatus, which presses the retaining arms (7) outwards, starting from the rear side (2b), from the front side surface (2a) of the surface-area portion (2).

12. Method in accordance with claim 10, **characterised in that** the bending of the retaining means takes place by means of a bending apparatus, which draws the retaining arms outwards from the front side surface (2a) of the flat portion (2).

13. Method in accordance with at least one of claims 10 to 12, **characterised in that** the bending of the retaining means takes place manually, with the aid of a manually-actuated bending apparatus, in particular a bending lever.

## Revendications

1. Dispositif permettant le guidage de contenants (19) avec
- un corps de base (1), qui présente une section plate (2) avec une pluralité d'ajours (4) et/ou d'évidements, et
- une pluralité de dispositifs de maintien (3), dans lequel respectivement au moins un dispositif de maintien (3) est disposé dans la zone d'un ajour (4) et/ou d'un évidement,
- dans lequel chaque dispositif de maintien (3) comprend au moins un élément de liaison de garde-corps (5a, 5b) cintré, qui est relié sur une première extrémité (6a, 6b) à la section plate (2) et, sur une deuxième extrémité opposée à la première extrémité (6a, 6b), à un support de garde-corps (22),
- dans lequel le support de garde-corps (22) présente au moins un bras de maintien (7), qui est orienté en grande partie de manière perpendiculaire par rapport au plan de la section plate (2), et
- dans lequel la section plate (2) du corps de base (1) et les dispositifs de maintien (3) sont réalisés d'un seul tenant avec l'élément de liaison de garde-corps (5a, 5b), le support de garde-corps (22) et le bras de maintien (7),
dans lequel
un garde-corps de guidage (18) permettant le guidage de contenants (19) est disposé directement sur les bras de maintien (7).

2. Dispositif selon la revendication 1, **caractérisé en ce que** le garde-corps de guidage (18) est relié à l'au moins un bras de maintien (7) sans autres moyens de liaison réalisés séparément.

3. Dispositif selon la revendication 1 ou 2, **caractérisé en ce que** le support de garde-corps (22) présente deux bras de maintien (7), dont un est réalisé d'un seul tenant avec un premier élément de liaison de garde-corps (5a) du dispositif de maintien (3) concerné et l'autre est réalisé d'un seul tenant avec un deuxième élément de liaison de garde-corps (5b) du dispositif de maintien (3) concerné, dans lequel le garde-corps de guidage (18) est disposé en particulier entre les bras de maintien (7).

4. Dispositif selon l'une quelconque des revendications précédentes, **caractérisé en ce que** deux garde-corps de guidage (18) ou plus sont fixés, en particulier de manière parallèle côte à côte, sur le support de garde-corps (22).

5. Dispositif selon l'une quelconque des revendications précédentes, en combinaison avec la revendication 3, **caractérisé en ce que** le dispositif de maintien (3) présente un pont de garde-corps (9) reliant les deux bras de maintien (7) et/ou les deux éléments de liaison de garde-corps (5a, 5b).

6. Dispositif selon l'une quelconque des revendications précédentes, **caractérisé en ce que** le bras de maintien (7) comprend un élément d'appui permettant de disposer le garde-corps de guidage (18).

7. Dispositif selon l'une quelconque des revendications précédentes, **caractérisé en ce que** le garde-corps de guidage (18) repose au moins par endroits sur le pont de garde-corps (9) réalisé en tant qu'élément d'appui.

8. Installation de traitement de contenants avec un dispositif permettant de guider des contenants (19) selon la revendication 1.

9. Installation de traitement de contenants selon la revendication 8, **caractérisée en ce que** le dispositif permettant de guider des contenants (19) est disposé dans un bouchon de contenant (20).

10. Procédé de fabrication d'un dispositif permettant le guidage de contenants (19) avec les étapes :
- de fourniture d'un corps de base (1) avec une section plate (2) ;
- de fabrication d'ajours (4) et/ou d'évidements dans la section plate (4), dans lequel au moins un dispositif de maintien (3) est généré pour des garde-corps de guidage de contenant (18) dans la zone de chaque ajour (4) / de chaque évidement, et chaque dispositif de maintien (3) comprend au moins un élément de liaison de garde-corps (5a, 5b) relié au corps de base (1) et un support de garde-corps (22) avec un bras de maintien (7),
- de placement d'un dispositif de cintrage sur le dispositif de maintien (3),
- de pliage du dispositif de maintien (3) dans la zone de l'élément de liaison de garde-corps (5a, 5b), dans lequel au moins un bras de maintien (7) est en grande partie positionné de manière perpendiculaire par rapport au plan de la section plate (2) et un élément de liaison de garde-corps (5a, 5b) se voit doter d'une section de forme cintrée,
- de disposition d'un garde-corps de guidage (18) permettant le guidage de contenants (19) directement sur les bras de maintien (7).

11. Procédé selon la revendication 10, **caractérisé en ce que** le pliage est effectué en partant d'un côté arrière (2b) du corps de base (2) au moyen d'un dispositif de cintrage, qui pousse les bras de maintien (7) pour les faire sortir de la surface côté avant (2a) de la section plate (2) en partant du côté arrière (2b).

12. Procédé selon la revendication 10, **caractérisé en ce que** le pliage du dispositif de maintien est effectué au moyen d'un dispositif de cintrage, qui tire les bras de maintien en partant de la surface côté avant (2a) de la section plate (2).

13. Procédé selon au moins l'une quelconque des revendications 10 à 12, **caractérisé en ce que** le pliage du dispositif de maintien est effectué manuellement en recourant à un dispositif de cintrage à commande manuelle, en particulier à un levier de cintrage.
